# EUROPEAN PATENT SPECIFICATION

(11) **EP 4 032 023 B1**
(45) Date of publication and mention of the grant of the patent: **25.10.2023**
(21) Application number: 20789671.3
(22) Date of filing: 17.09.2020
(51) Int. Cl.: G06K 19/06, B42D 25/36, G06K 19/08, G09F 3/03, B42D 25/47

(54) **ADHESIVE LABEL**
KLEBEETIKETT
ÉTIQUETTE ADHÉSIVE

(30) Priority: 19.09.2019 IT 201900016688
(43) Date of publication of application: 27.07.2022
(73) Proprietor: Istituto Poligrafico e Zecca dello Stato S.p.A., 00138 Roma (RM) (IT); Fondazione Bruno Kessler, 38122 Trento (IT)
(72) Inventor: GHISA, Giuseppe, 00198 Roma RM (IT); INFORTUNA, Francesco Antonio, 00198 Roma RM (IT); GUMIERO, Andrea, 00198 Roma RM (IT); CASSE, Gianluigi, 38122 Trento TN (IT); PUCKER, Georg, 38057 Pergine Valsugana TN (IT); LIU, Wei, 38122 Trento TN (IT)
(74) Representative: Primiceri, Maria Vittoria
(86) International application number: PCT/IB2020/058669
(87) International publication number: WO 2021/053574

(56) References cited:
- EP-A1- 2 905 767
- WO-A1-2016/102987
- US-A1- 2006 244 253
- US-A1- 2016 004 955

## Description

### Technical field of the invention

The present invention relates to a label apt to certify the authenticity of an article, a method for its realization and a process of verifying the authenticity of the article itself through said label.

In particular, the present invention relates to an adhesive label that allows the authenticity of an article to be guaranteed through the combined use of an authentication code and a security element, the latter with optical properties detectable with the aid of appropriate tools.

### Background

The phenomenon of market globalization has caused an exponential growth in the problems of fraud linked to the production and marketing of counterfeit products. Today, counterfeiting affects many product fields: from food to clothing, from spare parts to technological products and medicines, always damaging economic interests and often putting the health of consumers at risk.

In the context of the aforementioned international markets, it is increasingly difficult to control and contrast illegal practices related to counterfeiting and the possibility of having effective technologies, that can certify the authenticity of a product.

Nowadays there is a great number of authentication systems developed by operators specialized in the sector of supply chain certification. These systems are essentially based on the recognition of more or less complex graphic elements, generally obtained on labels. The latter, in the known art, can be provided with coded security elements and further stored in special databases that can be automatically queried, for example through specific apps, to verify the consistency of the product code whose authenticity is to be certified.

GB2399669 describes, for example, a method for associating with a product, for the purpose of its authentication, data stored in a database and resulting from a graphic processing carried out through a complex image algorithm.

WO 2012/131474 discloses a method for authenticating a document by encoding micro-texts hidden within a photo.

The solution described in US 2006/0244253 provides a method for certifying the authenticity of a product using a label with a pattern of fibrils which, through an algorithm, is encoded and stored in a barcode printed on the label.

JP 2016/189197 presents a method for generating complex images and the related decoding system of hidden information.

US 2016004955 A1 discloses a method of manufacturing a label, implemented with a centralized system that uses printing, recording and activation devices, in which the label comprises an authenticator element associated with a pattern of fibers contained in the label.

EP 2905767 A1 publication presents a label comprising optical authentication elements and a laminated structure configured to show the signs of its eventual detachment from the article. In particular, the verification of the authenticity of said label takes place by observing a layer of cholesteric liquid crystals, with an appropriate movement of the label or with special filters, to obtain either the detection of a chromatic variation or, if a hologram is provided, a selective detection of the latter. Unrelated to this verification of authenticity, EP 2905767 A1 discloses modulating the adhesive strength between the various layers composing thereof, in order to obtain a partial or total detachment thereof from the article, to prevent reuse of the label.

A drawback of the aforementioned known solutions lies in the fact that the elements used to certify authenticity, especially in the case of labels, can be replicated illegally, for example through the use of high-definition copy machines or scanners/printers. In such circumstances, a user not expert in certification systems, and in a general sense not even the technical means at his disposal dedicated to control, is not able to distinguish an original code from the same code replicated illegally. In a conformity check, indeed, the replicated code returned the same positive result achievable with the original code, effectively validating a non-authentic product.

### Summary of the invention

The technical problem posed and solved by the present invention is therefore to provide an adhesive label for authentication/identification of a product and related manufacturing and verification methods which allow to overcome one or more of the drawbacks above mentioned with reference to the known art.

This problem is solved by a label according to claim 1. The invention further relates to a method of manufacturing and verification of the authenticity of the aforementioned label according to claims 21, 25 and 29, respectively.

Preferred features of the present invention are the subject of the dependent claims.

In the context of the present disclosure, the term "reactive" referred to an optical component or element, is intended to denote specific optical properties of the latter, which are generally exhibited when it is hit by an electromagnetic radiation, typically in a selected spectrum of frequencies.

Similarly, the terms "authentication", "identification", "certification" or derivatives/similar are intended to denote the activities associated with the proof of the origin of the product, for example any article or intended as goods or a document, on which the label is affixed and/or to the retrieval therefrom of the information required for a tracing or verification process in general.

In this context, the terms "product", "article" or similar, related to the object or process to be certified by the invention label, will be used substantially as synonyms.

In a general meaning, the label according to the invention provides a support, intended for application on a product to be certified, and a removable substrate to which the support adheres reversibly. Adherence is obtained by virtue of an adhesive layer, interposed between the support and the substrate, which allows a reversible coupling between the two latter. Such adhesive is further configured in such a way that, after removing the substrate and applying thereto the product to be authenticated, any subsequent detachment of the support from the product itself is irreversible, in particular easily detectable.

The support bears an authentication code identifying the article and the adhesive layer comprises an optical security element, the authentication code and the security element being reciprocally positioned so as to define a common verification region, which can be also defined as an overlapping region. In particular, the optical security element can be inscribed within an area bearing the authentication code.

The security element consists of, or comprises, a reactive optical component, detectable at an inspection area of the overlapping region and the adhesive layer is configured so that the support, in case of its eventual detachment from the article, is devoid of the aforementioned reactive optical component.

By virtue of such structure, the label is particularly secure, since it causes to be unfeasible both its duplication through classical methods (for example photocopying, scanning by high definition scanner and reprinting) - by virtue of the non-reproducibility of the optical properties of the security element - and its reuse - by virtue of the irreversibility of the connection of the support of the label itself to the product.

In particular, it will be appreciated that, due to the particular configuration of the adhesive layer, advantageously the reactive optical component can no longer be associated with the authentication code borne by the support, whether the latter is detached from the article, making the label no longer operational and neutralizing any subsequent fraudulent applications.

In one of its preferred embodiments, the adhesive layer comprises an actual adhesive component and an adhesiveness control substance or component, the latter apt to modify a detachment resistance value between the support and the actual adhesive component. More preferably, this adhesiveness control substance is configured to determine a detachment resistance value of the support from the adhesive layer lower than a detachment resistance value of the adhesive layer from the article whereon it is applied.

The adhesive component and the adhesiveness control component can be applied as sub-layers of the overall adhesive layer and mixed to form the latter seamlessly.

The presence of such adhesiveness control component allows to modulate the detachment resistance values of the label structural parts with regard to the type of application to be carried out.

It will be appreciated that the proposed label structure actually offers a two-factor certification level, achieved both in structural and functional terms, wherein the combined verification of the identification data borne by the authentication code and the detection of the presence of a security component having selected optical properties, thus confirming the authenticity of the article. The absence of the specific combination of both of these factors denies authentication.

Furthermore, the authentication code can advantageously be generated and borne by the support as a function of the reactive optical element(s), and is preferably associated with data of position of the latter, in particular a relative position with respect to a reference element permanently borne from the support itself. Thereby, each label can potentially represent a unique combination of specific elements not easily replicable, being able to customize and significantly increase the system security level. In other words, the authentication code can provide specific information related to the optical element, in particular the position of the latter in the overlapping region, further raising the level of authentication security through a cross-check between code and optical element.

In its preferred embodiments, furthermore, the invention label appears to be simple to manufacture and easy to use at the time of verification, providing an effective validation procedure that can be further performed directly by the purchaser of the article.

According to a further aspect of the present invention, an authentication procedure for a product based on the aforementioned label and executable using both simple portable devices, such as a common smartphone, and further other dedicated equipment is provided.

The label according to the invention can further be used in systems that make use of a "distributed" authentication technology, such as in the case of blockchain technology, for the identification and enhancement of the products offered, particularly in the agro-food field.

In specific embodiments of an authentication system or process that uses the label of the invention, a verification platform can be provided configured to use both traditional type data storage systems - such as client-server, clouds or equivalent - and systems based on blockchain.

In such systems and processes, the invention allows to create a digital certified information relationship between the producer (anywhere he is) and the final consumer (anywhere he is), delegating the label itself with the crucial role of identifying the product, the manufacturer and all stages of production. Advantageously, by securely identifying the product, the label simplifies the certification activities in those stages of the production process where it is used and supports the consumer in obtaining certain information about the product itself.

Other advantages, characteristics and methods of use of the present invention will become apparent from the following detailed description of several embodiments, presented by way of non-limiting example.

### Brief description of the drawings

Reference will be made to the figures of the attached drawings, in which:
- Figure 1 schematically illustrates an exploded view of a representative structure of a preferred embodiment of a label according to the present invention;
- Figure 2 shows an exemplary top view of an embodiment of the label according to the present invention;
- Figure 3 shows a preferred embodiment of an authentication code and a security element related to an embodiment of the label according to the present invention;
- Figures 4-4A, 5 and 5A show flow diagrams related respectively to a method of manufacturing, a verification method and a method of authenticating a label according to a first embodiment;
- Figures 6, 7 and 7A show flow diagrams respectively related to a method of manufacturing, a verification method and a method of authenticating a label according to a second embodiment;
- Figures 8, 9 and 9A show flow diagrams related respectively to a method of manufacturing, a verification method and a method of authenticating a label according to a third embodiment.
- Figure 10 shows an example of a decay curve obtained by interpolation of the average emission intensity values detected at the verification fibril, within the search area, and determined with a frequency of 15 Hz, for the duration total of one second.

### Detailed description of preferred embodiments

Several embodiments and variants of the invention will be hereinafter described, and this with reference to the figures above introduced.

In the following detailed description, further embodiments and variants with respect to embodiments and variants already discussed in the same description will be illustrated limitedly to the differences with what has already been stated. Furthermore, the different embodiments and variants described below are liable of being used in combination, where compatible.

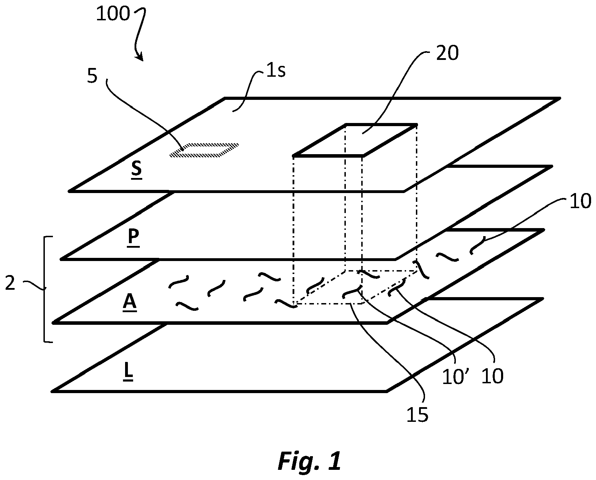

With initial reference to Figure 1, a preferred embodiment of an authentication or identification label according to the present invention is schematically illustrated in an exploded exemplary view.

The label, overall denoted by the reference 100, is suitable for certifying the authenticity of items, or products, or goods, and comprises a support S, a removable substrates L and an adhesive layer, or medium, 2 interposed therebetween.

The label 100 is intended for use in most product sectors, and preferred application in the context of activities associated with the production chains, from production to marketing of the final product.

In the embodiment herein considered, the support S represents the outermost layer of the label 100 when applied to the product and can be made of paper material. Preferably, it has transparency characteristics at specific wavelengths, preferably between 300 and 1000 nm, when affected by electromagnetic radiation.

The support S comprises a surface, or face, of observation 1s, substantially planar, which faces the user once the support S is applied to the article. Support S further bears an authentication code 20 identifying the article on which it is applied, as will be below described in greater detail.

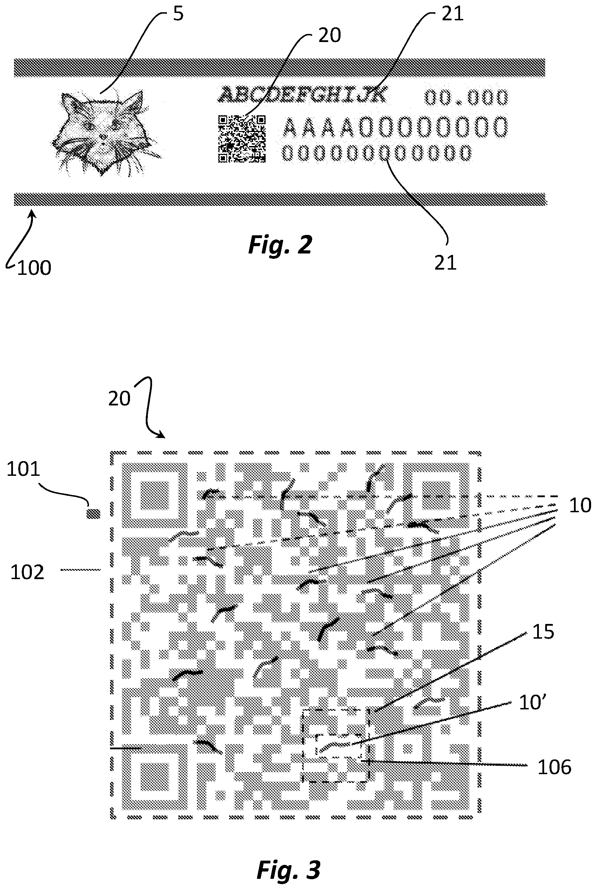

With further reference to Figures 2 and 3, the support S preferably bears, on the observation surface 1s, permanent data such as information 5 on the type of article and/or one (or more) reference element - or mark -, or landmark, 101 for the management of registers associated with the mutual position of said information 5 and of the authentication code 20. Preferably, the reference element 101 is further suitable for determining the position data associated with a security element of the label 100 which will be shortly introduced.

The support S is preferably made, supplied or treated, so as to be suitable for digital printing operations, for example ink-jet, laser or comparable technique. As an alternative to a paper material, the support S can be made using synthetic materials, for example PET, PVC, Polycarbonate, preferably having the aforementioned specific characteristics of transparency.

The authentication code 20 borne from support S preferably comprises a two-dimensional graphic element, for example a data-matrix or a QR code, as illustrated in Figure 3, advantageously containing the link to a website with the characteristics of the article and/or ad a unit containing the data required for the tracing and authenticity verification process.

Support S may further bear additional information, such as graphics or alphanumeric codes 21, for example an identification number of the label, service numbers used to facilitate the production process of the labels and specific numbers of the items on which the label is applied.

The adhesive layer, or medium, overall denoted by the reference 2, as mentioned, is interposed between the support S and the substrate L. The adhesive layer 2 is configured to carry out an irreversible detachment of the support S from the article after application, while the substrate L is made such as to reversibly adhere to the support S.

The substrate L, which can be made for example of silicone paper, has the function of protecting the adhesive layer 2 until the time of use of the label 100, by removing it from the support S and subsequently affixing it to the article.

The support S has an additional surface or face, which can be defined as internal or laying and opposite to the observation surface or face 1s, which preferably has surface characteristics, for example roughness, such as to adhere to the adhesive layer 2. Preferable values surface roughness expressed in the *Bendtsen* scale are indicated in Table 1 reported in the following of this description.

In a preferred embodiment, and with reference to a manufacturing process of the label 100, said inner face realizes a laying surface on which the adhesive layer 2 is applied before the support S adhered to the substrate L.

Furthermore, the adhesive layer 2 comprises, or receives, a security element, overall denoted by the reference 10.

The mutual position of the security element 10 and the aforementioned authentication code 20 determines their common region of overlapping, or verification, 15. The security element comprises at least one reactive optical component, or element, 10' detectable at an inspection area 106 internal to, or partially or completely contained within, the overlapping region 15.

The authentication code 20 is generated and applied on support S in such a way as to leave said inspection area 106 completely, or partially, uncovered, in any case in order to carry out the correct detection of the reactive optical component 10', and therefore the verification of authenticity.

The authentication code 20 is intended to occupy an application region 102 on support S, preferably greater than the overlapping region 15. Preferably, the application region 102 is increased, i.e. left free for a greater extent, than the space actually occupied by the authentication code 20, in order to guarantee the code itself to be read.

In a preferred embodiment, the overlapping region contains a single reactive optical component 10'.

In case that the authentication code 20 is a two-dimensional graphic code, such as a data-matrix or QR code, the inspection area 106 is obtained on said code during its generation and by excluding several dots ("Missing Dots Code").

The authentication code 20 can contain data related to the position of the inspection area 106 and/or related to the position and/or to one or more quantities associated with the optical properties of the reactive optical component 10'. If code 20 encodes position information related to component 10', these may be related to the reference element 101.

Furthermore, the adhesive layer 2 is specifically configured in such a way that, upon detachment of the support S from the article, the latter is separated from the adhesive layer A, therefore without the reactive optical component 10'.

In relation to the aspect linked to a selective separability of the components constituting the label 100, the adhesive layer 2 advantageously comprises:
- a main substrate, or component, of adhesive material, or component, or adhesive layer, A, and
- a further component, or substrate, of an adhesiveness control substance, or component, P, apt to modify a detachment resistance value between the support S and said adhesive substrate A.

In other words, substance P performs the function of modulating the degree of adhesiveness of support S to the adhesive substrate A and, in general, to layer 2.

Advantageously, substance P is configured to determine a detachment resistance value of support S from adhesive layer 2 lower than a detachment resistance value of adhesive layer 2 from the article.

It should be noted that in the illustrated examples, in particular with reference to Figure 1, substance P has been described and represented, for greater clarity, as a further sub-layer, interposed between the laying surface of the label 100 and the adhesive substrate A.

In this sense, advantageous embodiments of the label 100 provide that the substance P is realized or supplied in the form of a film or coating of material applied to the laying surface, or interface, of the support S with the adhesive substrate A. Preferably, substance P is applied preliminary to the application of the adhesive substrate A.

Substance P may for example be a silicone film of material. The amount can vary according to the type of support S, and preferably between 0,3 and 0,8 grams per square meter (g/m²) of application surface. Alternatively, other substances with equivalent characteristics such as natural or synthetic waxes can be used.

However, alternative construction variants are not excluded. For example, this substance P can be supplied being already mixed with the adhesive component A, thus realizing a single adhesive layer 2.

The adhesive component A, or glue, has the dual task of making the label 100 functional and allowing the same to be affixed to the article. Preferably, the aforementioned glue A comprises, indeed, the reactive optical component 10' apt to make the label 100 operational.

The amount of adhesive component A may further vary depending on the type of support, preferably between 15 and 22 grams per square meter (g/m²) of application surface. Table 1 shows the optimal amounts of adhesive, expressed in grams per square meter, to be applied according to the degree of roughness of the surface.

**Table 1**

| **Rough** | **Gr/m²** |
|---|---|
| **BENDTSEN** | **ADHESIVE** |
| 100-150 | 16-18 |
| 150-200 | 18-20 |
| 200-300 | 20-22 |

Returning now to the aspects related to the presence of the aforementioned security element 10, the reactive optical component 10' has specific optical properties, detectable (or visible) when affected by natural or artificial electromagnetic radiation in a selected spectrum of frequencies.

The reactive optical component 10', when excited by the aforementioned electromagnetic radiation - by virtue of the transparency characteristics, local or global, of the support S with respect to the same electromagnetic radiation - is detectable using appropriate detection means or verification.

In a preferred embodiment, better displayed in Figure 3, the security element 10 comprises a plurality of fibers or fibrils, for example vegetable or synthetic, distributed within the adhesive layer 2, preferably in the adhesive component, or glue, A. The distribution can be random.

In an embodiment of the label 100, at least one of said plurality of fibers 10 is the reactive optical component 10'. In preferred variants, a subset of said fibers is positioned in the inspection area 106 and thus realizes the reactive optical component 10' (or a plurality of reactive optical components).

In any case, the reactive optical component 10' and the security element 10 preferably have the same shape and size, i.e. the security element 10 consists of the reactive optical component 10', in particular in one of the aforementioned fibers.

Preferably, the density of fibers, and possibly therefore of the component 10', is calibrated according to the characteristics of the authentication code 20 borne by the support S, for example according to the size of the graphics that constitutes the authentication code 20 whether the latter is a two-dimensional/printable graphic code.

The reactive optical component 10', or each fibril realizing the same, has preferably an elongated shape and a substantially circular section. Further preferably, it is invisible by the naked eye and has a length comprised between about 0,5 and about 4 millimetres (mm) and a variable diameter between about 20 and about 80 microns (µm). As previously mentioned, the reactive optical component 10' is preferably added to the glue A and even more preferably in quantities such as to measure the number per square meter (number/m²) according to the characteristics, for example dimensions, of the authentication code 20.

Purely by way of example, for an authentication code 20 realized as a data-matrix with dimensions (5 x 5) millimetres (mm), one or more reactive optical elements 10' having length comprised between 1 - 1.5 mm dispersed within the adhesive A with density in the range 1600 - 3200 reactive optical elements 10' per square decimetre (dm²) of material can be used.

The reactive optical component 10' is preferably made of vegetable fibers, for example viscose, or synthetic fibers, for example nylon. The specific optical properties of the reactive optical component 10' are acquired during its manufacture, through the interaction of its basic structure with optically active substances. This interaction involves a definition of the properties of the element both by simple mixing, and with a specific process that leads to form chemical bonds between the optically active substance(s) and the security element 10.

An exemplary, but not complete, nor limiting, list of said optically active substances comprises, in combination, sub-combinations or alternatively: organic dyes, metal-organic complexes containing iridium, palladium, rhodium, silver, gold, platinum and others, metal nanoparticles, nanoparticles based on dielectric materials, semiconductor nanoparticles.

For example, the metallic nanoparticles in turn can be based on silver, gold, platinum, iridium, rhodium and palladium.

The dielectric nano-particles can for example be: metal oxides, sulphur oxides, fluorides or chlorides with cations of the alkaline, alkaline earth type, transition metals, and semimetals such as germanium, silicon, aluminium and selenium. In general, the dielectric nanoparticles are preferably doped with single elements or combinations of transition metals and/or rare earths.

The semiconductor nanoparticles can be of the core or core shell type and formed by one or more combinations of the following elements: silicon, germanium, arsenic, phosphorus, gallium, lead, cadmium, sulphur, selenium, indium, nitrogen, electroluminescent polymers.

In one possible embodiment, the reactive optical component 10' comprises fibrils, optically inactive by nature, which are activated by adding optically active particles. In an activation process, for example, the viscose or nylon fibrils are immersed in a suspension of optically active particles and mixed therewith. The mixing allows the particles optically active to diffuse and penetrate among the fibers constituting the fibrils. During mixing, the optically active particles adsorb themselves on the surface of the fibers, fixing thereto. The activated fibrils are thereby recovered from the suspension by means of physical and physical-chemical processes such as filtration, decantation or centrifuge.

In another possible embodiment, the inactive fibrils are made functional with reactive groups such as for example acrylic, vinyl, carboxylic, epoxy, etc. They are then placed in a suspension containing the optically active particles and mixed. The mixing allows the diffusion of the particles within the fibers constituting the fibrils. In order to anchor the particles to the fibrils, a chemical process, such as a radical cascade or an ionic process, is triggered during mixing using UV radiation and an appropriate initiator. The triggered reaction leads to the activation of the functional groups arranged on the fibers of the fibrils, which react with the optically active particles fixing the same. The activated fibrils are recovered from the suspension by means of physical and physical-chemical processes such as filtration, decantation or centrifuge.

In a further embodiment, the optically active particles are made functional with reactive groups such as for example vinyl, acrylic, epoxy, carboxylic groups, etc. and placed in a suspension to be mixed with the fibrils. In order to fix the particles to the fibrils, during mixing the functional groups are activated, for example, by the use of chemical activators or by irradiation of UV light. These groups react with the fibers constituting the fibrils in an irreversible way, allowing to anchor the particles to the fibers and thereby making the fibrils optically active.

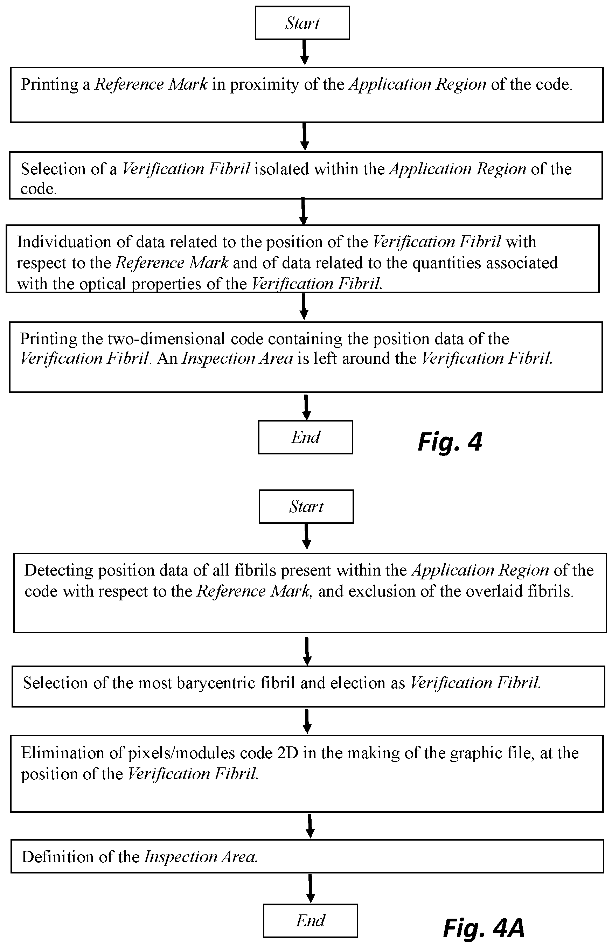

According to a further aspect of the present invention, a method of manufacturing of the label of the invention is provided, in particular the label 100 described above. Several main steps of this method, according to a preferred embodiment variant, are exemplified in Figures 4, 6, 8.

Preferably, during the realization step of the label 100, the adhesive layer 2 comprises a plurality of reactive optical elements, further contained in the overlapping region 15 as already defined or to be defined. Among them, a reactive optical component is identified, denoted by 10' and, for simplicity of description, it can be named "verification fibril", or the reactive optical component suitable for allowing a verification of authenticity.

With reference to Figure 3, the verification fibril 10' is selected during the construction step of the label 100 within the application region 102 of the authentication code 20 according to specific selection criteria. A preferred choice criterion is associated with the search for the reactive optical component in a more barycentric position than the application region 102, and not superimposed on other reactive optical elements.

In general terms, conventional machinery can be used for the realization of the label 100, preferably provided with variable data printing systems, for example with ink-jet heads, measurement systems provided with detection means of the reactive optical component, for example installed on the machinery, and a special control unit, with hardware/software means for the management of the activities required to realize the label. The label can be printed on paper or other materials in sheet or coil form.

The detection means used during the realization of the label 100 allow to collect data related to the position and quantities associated with the optical properties, for example of fluorescence, of the reactive optical component and/or to capture an image in which this verification fibril is comprised, for example of the overlapping region 15.

Said detection means preferably comprises:
- an emitter sensor, configured to generate a scan signal at a first wavelength, or excitation signal, of the reactive optical component;
- a radiation receiver sensor, configured to collect a response signal at a second response wavelength, received by said component.

Preferably, the detection means further comprises or can be operatively associated with a software implementing an algorithm for processing the data related to said scan and response signal. The algorithm in particular allows to collect data related to the position of the reactive optical component 10' and the characteristics of the emitted radiation. With reference to Figure 4A, the algorithm preferably allows to select the reactive optical component 10' to be used for the validation of the label, processing the calculations required to determine which portions of the authentication code 20 not to be generated, without compromising its readability, to ensure the complete detection of the verification fibril, once the code 20 itself is applied to the support 20.

The selection of the reactive optical component 10' and the subsequent definition of the authentication code 20 can be carried out further according to a recursive process.

As mentioned, therefore, one purpose of detection means is to identify, with respect to the selected fibril, the position, preferably with respect to a reference element 101, and to detect the quantities associated with the relative optical properties, for example constant characteristics of the so-called build-up and decay of the type disclosed in [1] and [2], herein incorporated by these references.

The aforesaid optical properties can for example be linked to photoluminescence (both stokes and anti-stokes) phenomena of the type described in [3] and herein incorporated by means of these references, phosphorescence, chemiluminescence, electroluminescence and absorption in specific spectral areas. The reactive optical component 10' can be activated/activated according to its composition both by natural sources (such as for example sunlight) and by artificial sources (for example diodes, laser-diodes, UV lamps, continuous or pulsed halogen lamps).

Furthermore, the optical response of the reactive optical components acceding for selection can be analysed, alternatively or in combination, in the following modes:
- analysis of the reflectance spectrum, which is obtained by measuring the spectrum with a dedicated reader or using the information contained in the images of a smartphone, encoded as RGB or grey levels;
- analysis of the emission spectrum, which is obtained by measuring the spectrum with a dedicated reader or by analysing the information contained in the images of a smartphone, encoded as RGB or grey levels;
- analysis of the time emission signal using a temporal sequence of images, using the information contained in the images of a smartphone encoded as RGB or grey levels;
- analysis of the temporal emission signal using dedicated readers which allow to detect and measure decay and rise times, and intensity of the response signal in specific spectral intervals and time windows.

In the example herein described of realization of a label 100, the presence of a plurality of reactive optical components is considered, among which a verification fibril 10' is selected through said detection means and according to a selection criterion implemented by an algorithm. In construction variants, only one reactive optical component 10' can be present in the adhesive layer 2 which performs the role of verification fibril.

Further in this example, the creation of a label bearing a two-dimensional graphic authentication code, of the type illustrated in Figure 3, is considered.

As previously mentioned, a label having a support S bearing a reference element 101 in proximity to the application region 102 is provided, for registering the code 20 and any further graphics or codes 5, 21 available.

On support S, once the permanent data 5, 21 have been applied, the application region 102 of the authentication code 20 is identified.

The verification fibril 10' is detected and the overlapping region 15 and the inspection area 106 are thereby determined as a function of the position of the verification fibril 10'.

An algorithm can digitally generate a two-dimensional authentication code suitable for printing on the support S. This code is generated taking into account the inspection area 106. As previously mentioned, the structure or graphic pattern of the code 20 appears to be modified according to the characteristics (preferably dimensions and position) of the (selected) verification fibril (or more) so as to leave the area occupied by the same uncovered, and so as to enable to correctly detect the quantities associated with the optical properties in a subsequent verification step of the label 100.

The algorithm can be calibrated so that the error introduced by omitting some portions of the authentication code never exceeds a maximum percentage of error allowed to always allow an optimal reading of the code. As known to a person skilled in the art, the security limit associated with the percentage of error is, for example, a function of the resolution of the print heads used in the production phase and of the characteristics of the material which the support S is made therewith.

The code thereby generated is therefore printed and subsequently the data is collected and, in case, allocated in a remote database.

The realization of the label 100 is completed and subsequent operations of die-cutting, cutting, winding, packaging of the labels in batches can be provided.

It is to be understood that the description of the method of manufacturing above shown is exemplary and not limiting, as it may comprise specific variations, for example, depending on different configurations of the systems (in terms of hardware/software characteristics) used.

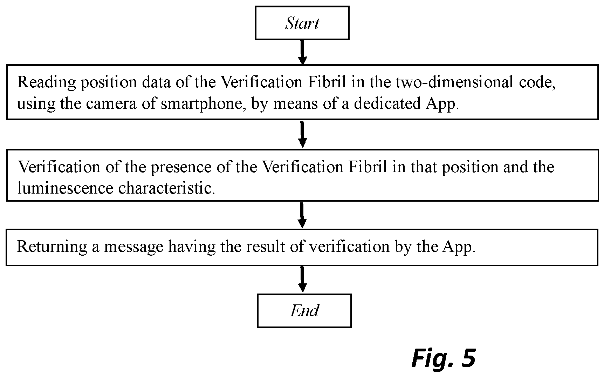

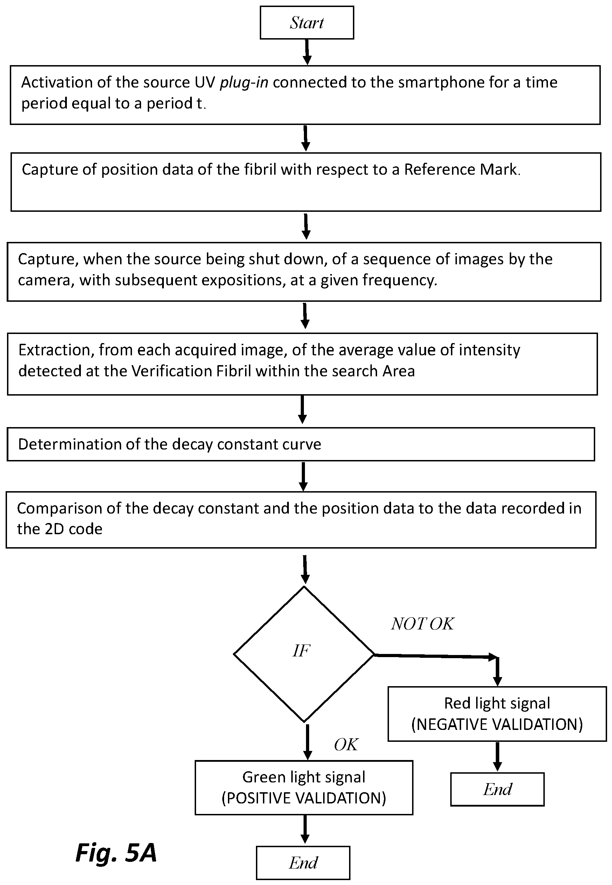

A verification/authenticity method of a product will now be considered as based on the label of the invention, in particular the label 100 described above. Several steps of this method, according to preferred variants of execution, are exemplified in Figures 5, 5A, 7, 7A, 9, 9A.

With further regard to a procedure for verifying the authenticity of the label 100, detection means of the reactive optical component 10' is provided.

Compared to the detection means - preferably fixed and/or installed in the machinery - considered in the production phase above described, similar detection means is provided for the verification procedure, although advantageously of the mobile/portable type, for example a smartphone provided with a flash and a video camera.

All the variants of the authenticity verification procedure of the label 100 shown below refer to the use of a single verification fibril 10', selected in the application region 102 of a two-dimensional authentication code. It is apparent that further variants can further provide the use of several verification fibrils 10' at the same time - i.e. a verification fibril 10' defined by a plurality of reactive optical components, in particular independent fibrils - for example depending on the dimensions selected for each thereof. The position of the verification fibril is further related, preferably, to the reference element 101.

During the realization of the label, as mentioned, the data related to the position and quantities associated with the optical properties of the reactive optical component 10' and the images in which the verification fibril is comprised are collected by fixed detection means.

Depending on the type of data management collected by detection means during the label production phase, the verification procedure can provide the preferred variants described below.

### Verification method of the coordinates/position of the reactive optical component without database

With reference to Figures 4, 4A, 5, 5A, the steps of the method provide in general terms that, during the realization of the label, the data related to the position and quantities associated with the optical properties of the verification fibril 10' are transferred to the two-dimensional code 20.

The verification method therefore provides to:
- detect the code 20 to acquire the data contained therein through portable detection means;
- check the presence of the verification fibril 10' in the position detected during the implementation of code 20;
- compare the current data detected with portable detection means related to the quantities associated with the optical properties of the verification fibril 10' with respect to corresponding data contained in code 2.

The detection means, in case of congruence, returns a success message, that is the authenticity of the product associated with the label, otherwise an error message.

### Verification method of the coordinates/position of the reactive optical component with database

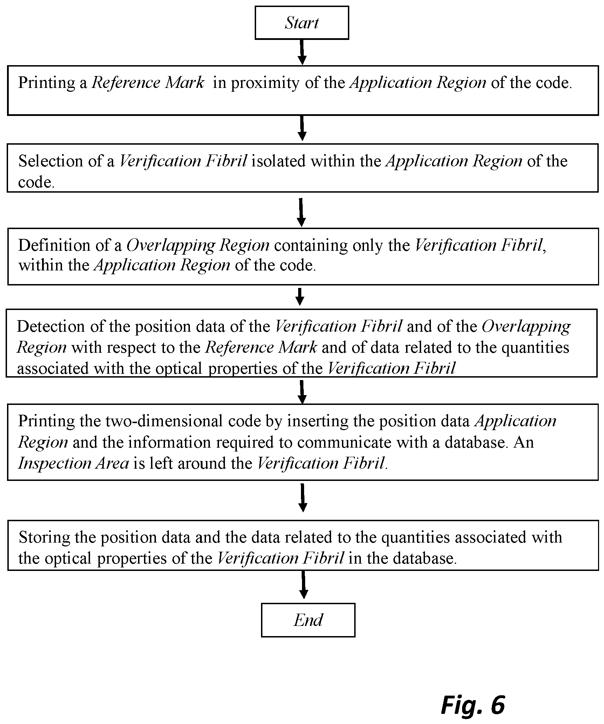

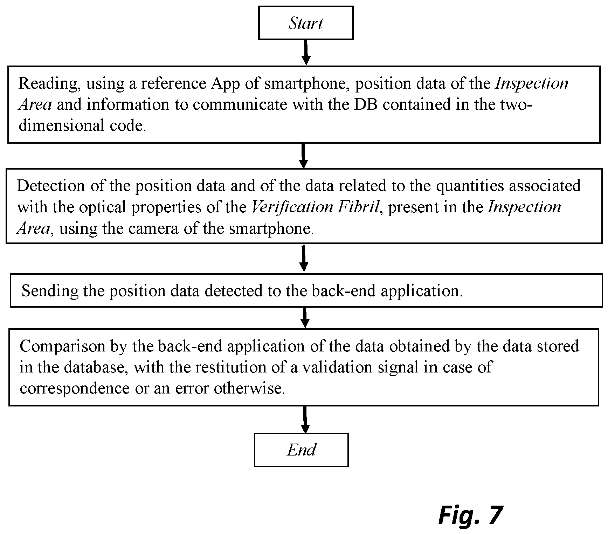

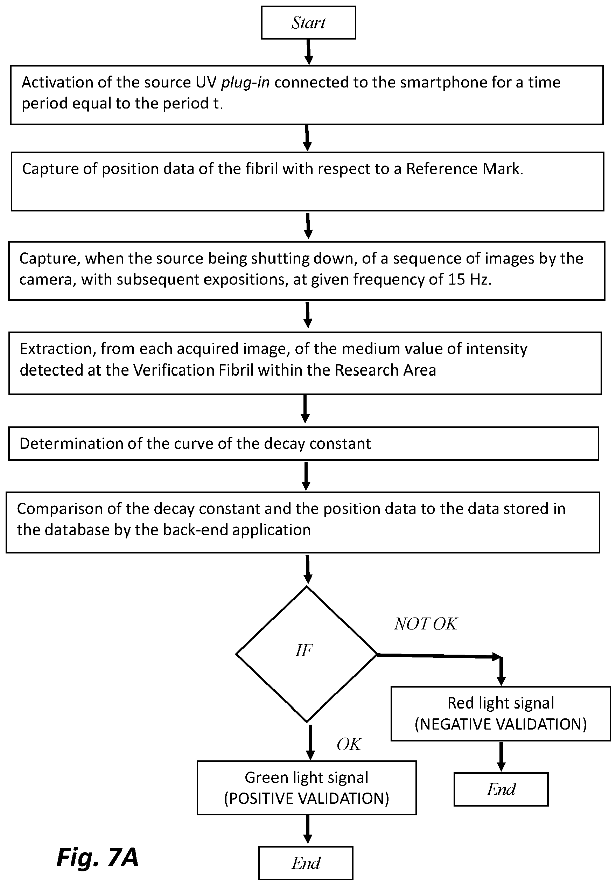

With reference to Figures 6, 7 and 7A, the steps of the method provide in general terms that, during the realization of the label, the two-dimensional code 20 receives the data related to the position of the inspection area 102 and the information required to communicate bi-directionally with a remote database, for example via a named back-end app. Said remote database bears, in a memory area, the data related to the position and quantities associated with the optical properties of the verification fibril 10'.

The verification method therefore provides to:
- detect code 20 to acquire the data contained therein through portable detection means;
- detect the data related to the position and quantities associated with the optical properties of the verification fibril 10' in the inspection area 102;
- use the data to query the remote database, i.e., for example, send the detected data to the back-end app;
- compare the data collected with those stored in the database during the realization of the label.

The detection means, in case of congruence, returns a success message, that is the authenticity of the product associated with the label, otherwise an error message.

### Image verification method with database

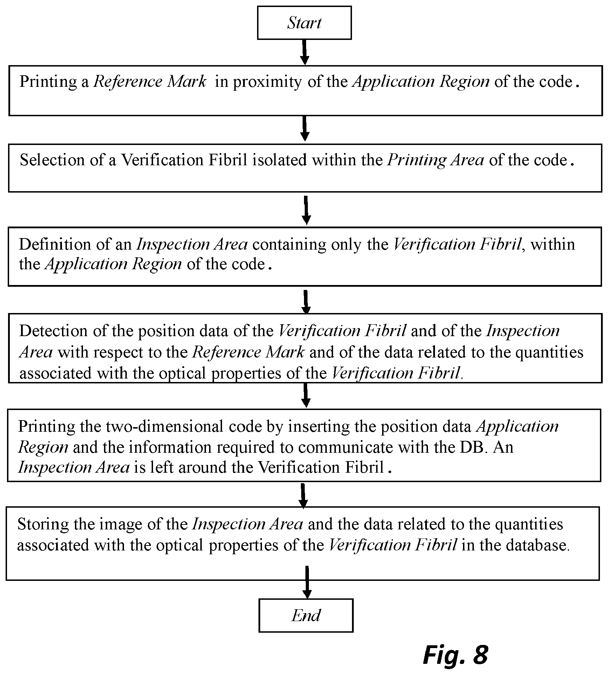

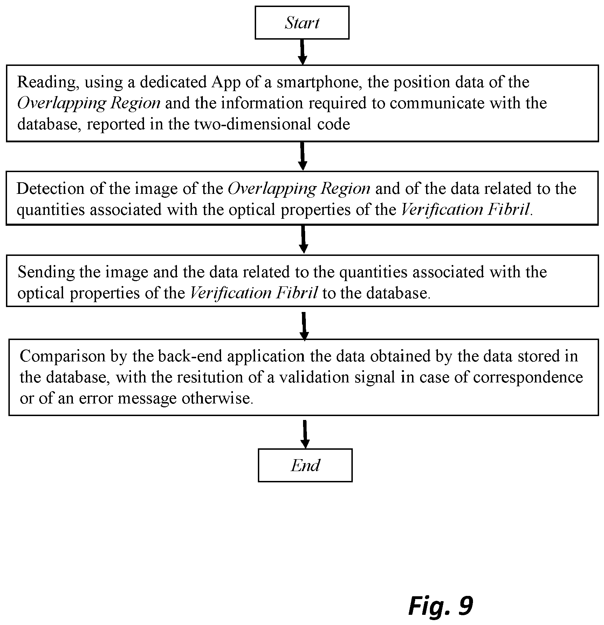

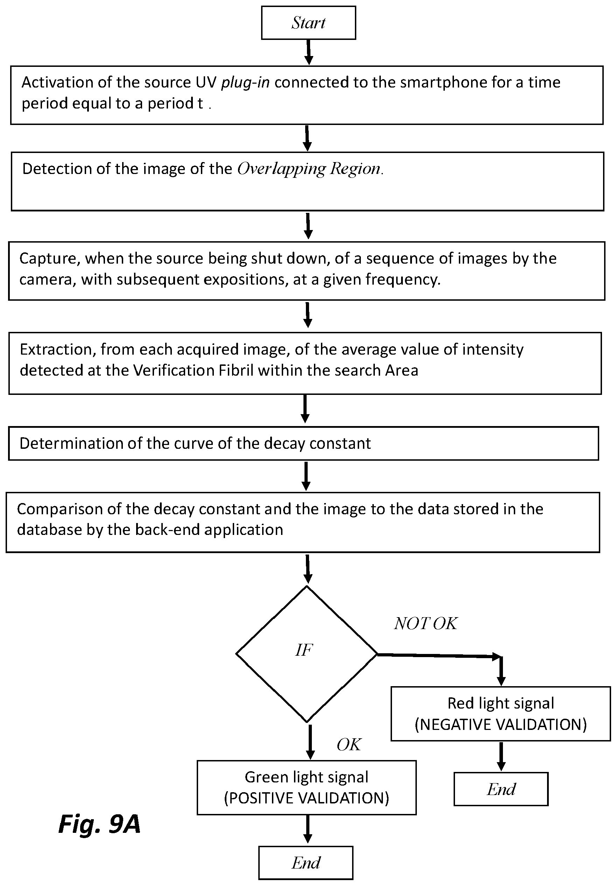

With reference to Figures 8, 9 and 9A, the steps of the verification method provide in general terms to use an image of the inspection area 106 containing the verification fibril 10'.

During the creation of the label, the position data related to the inspection area 106 and the information required to communicate bi-directionally with a remote database, for example via a named back-end app. Said remote database bears, in a memory area, said image of the inspection area 102 and the quantities associated with the optical properties of the verification fibril 10'.

The verification method therefore provides to:
- detect code 20 to acquire the data contained therein through portable detection means;
- acquire an image of the inspection area 102 and detect the quantities associated with the optical properties of the verification fibril 10';
- use the data to query the remote database, i.e., for example, send the image and data detected to the back-end app;
- compare the data collected with those stored in the database during the realization of the label.

The detection means, in case of congruence, returns a success message, that is the authenticity of the product associated with the label, otherwise an error message.

For the use of the above methods, portable detection means is used, which can generate a signal such as electromagnetic radiation and detect a response signal of the relative optical properties of the reactive optical component 10'. In the preferred embodiments herein illustrated with reference to Figures 5A, 7A and 9A, a smartphone provided with a flash, and a camera, as well as a dedicated app, is advantageously used for the automatic execution of the operations required for verifying authenticity.

Preferably, the authenticity of the label 100 is based on the recognition of optical properties related to photoluminescence phenomena (for example stokes and anti-stokes), phosphorescence, chemiluminescence, electroluminescence and absorption in specific spectral areas.

By way of example but not exclusively, the physical quantities used for the authentication of the label may be the decay or rise constants of the luminescent emission, reflectance measurements and/or characteristics of the emission spectra. These quantities can be detected by a simple smartphone using specifically developed procedures, software and applications, or by dedicated hardware and software systems.

In an example of the production and authentication process described below, the case of an authentication code 20 with phosphorescent reactive optical component 10' excited by UV light can be considered.

The production plant is provided with a UV source capable of activating the fluorescence of the optical component 10'. Within the area determined for printing the code, the system selects a fibril (verification fibril) on the basis of specific criteria, such as position, intensity of emission, or other.

Therefore, the system proceeds to acquire the characteristics required for authentication. In the considered case, the UV source of the system illuminates the selected verification fibril 10' for a time, for example, of one second. A detection system, such as a camera provided with a CMOS sensor, detects the phosphorescent decay of the same, determining, for example, the decay constant or the ratio of the emission intensity at defined intervals of time. This information is acquired and collected on a server and/or used to generate the unique authentication code 20 to be printed on the label 100 and, in a following comparison, to be verified during the authentication process.

In an example of authentication of the same label 100, the case of using the smartphone with a dedicated plug-in light source is considered. Through a specifically developed software, the plug-in UV source connected to the smartphone is activated for a time equal to, for example, one second. When the source being shutting down, the camera captures a sequence of images, with successive exposures, at a frequency of 15 Hz. The images collected contain information related to the decay of the phosphorescent emission.

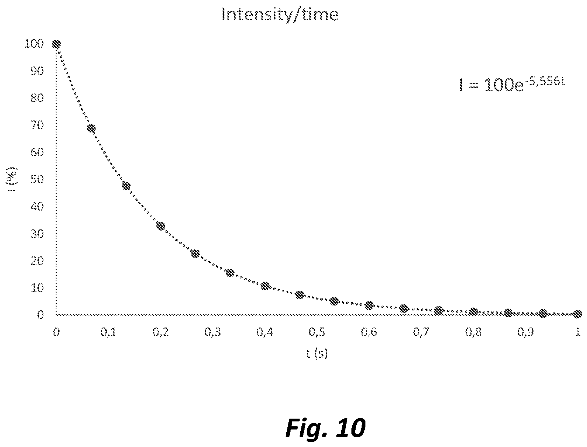

The dedicated software installed on the smartphone, through an analysis defined in the algorithm itself, extracts for example, from each acquired image, the average intensity value detected at the verification fibril within the search area, and determines a decay curve, shown by way of example with reference to Figure 10.

From the curve, the software determines, depending on the case, the decay constant, that is, the ratio of intensities over a fixed interval of time, or other.

Once the value is obtained, the latter is compared with the data recorded in the 2D code or in a database associated with a server, depending on the case, at the time of preparing the label. If the two values, net of a certain uncertainty, coincide, the authentication is confirmed. The smartphone software application will then show the successful or failed authentication through, for example with a green or red light signal, the emission of sounds or specific texts on the screen.

The present invention has been hitherto described with reference to preferred embodiments. It should be understood that there may be other embodiments referring to the same inventive core, as defined by the scope of the claims set forth below.
[1] *Build-up o rise*: Decay curves can show a rise of the light signal. This phenomenon is due to processes of energy transfer among different ions and can be observed both by stokes and anti-stokes emission, (page 188, An introduction to the optical spectroscopy of solids, J. Garcia Solè, L.E. Bausà and D. Jaque Universidad Autonoma de Madrid, Madrid, Spain, ISBN 0-470-86885-6 (cloth)-ISBN 0-470-86886-4 (pbk.)
[2] Lifetime: (Henderson Imbusch, page 166, Optical Spectroscopy of Inorganic solids, 1989, Oxford University Press, New York, ISBN 0-19-851372-0) The "lifetime" is an average value while an emitting atom or ion remains in the excited state.
   Decay curve. It is the experimental curve obtained following the time emission of an emission signal of an atom or ion excited after the excitation by a pulse source (*laser o flash lamp*). (Henderson Imbusch, page 166).
[3] *Stokes, anti stokes.* (pages 22-23, An introduction to the optical spectroscopy of solids, J. Garcia Solè, L.E. Bausà and D. Jaque Universidad Autonoma de Madrid, Madrid, Spain, ISBN 0-470-86885-6 (cloth) - ISBN 0-470-86886-4 (pbk.)
   *Stokes emission*: The energy emitted is lower with respect to the energy absorbed.
   *Anti-stokes shift*: The energy emitted is higher with respect to the energy absorbed.

## Claims

1. A label (100) identifying or certifying the authenticity of an article, which label (100) comprises:
▪ a support (S), configured to be applied to the article and bearing an authentication code (20) of the article;
▪ a removable substrate (L), which reversibly adheres to said support (S);
▪ an adhesive layer (2), interposed between said support (S) and said removable substrate (L), configured to couple said support (S) to the article and bearing a security element (10),
wherein the authentication code (20) of said support (S) and the security element (10) of said adhesive layer (2) are mutually positioned so as to define an overlapping region (15),
wherein said security element (10) comprises an optical component (10') reactive to an electromagnetic radiation and detectable at an inspection area (106) of said overlapping region (15)
and wherein said adhesive layer (2) is configured so that, in case of subsequent detachment of said support (S) from the article, said reactive optical component (10') remains adhered to the article itself.

2. The label (100) according to claim 1, wherein said adhesive layer (2) comprises an adhesive component (A) and an adhesiveness control component (P), said control component (P) being apt to modulate a detachment resistance value between said support (S) and said adhesive component (A).

3. The label (100) according to claim 2, wherein said adhesiveness control component (P) is configured to determine a detachment resistance value of the support (S) from the adhesive layer (A) lower than a detachment resistance value of the adhesive layer (A) from the article.

4. The label (100) according to claim 2 or 3, wherein said adhesiveness control component (P) is in the form of a film of material applied at an interface surface of the support (S) with the adhesive layer (A).

5. The label (100) according to any one of claims 2 to 4, wherein said adhesiveness control component (P) comprises a silicone, natural or synthetic wax - based material.

6. The label (100) according to any one of the previous claims, wherein said support (S) is made of a material transparent to an electromagnetic radiation in a selected spectrum of frequencies.

7. The label (100) according to any one of the previous claims, wherein said support (S) is made of a plastic or paper material.

8. The label (100) according to any one of the previous claims, which comprises a plurality of reactive optical components (10'), borne by said adhesive layer (2) according to a random distribution.

9. The label (100) according to any one of the previous claims, wherein said reactive optical component (10') comprises vegetable or synthetic fibers.

10. The label (100) according to any one of the previous claims, wherein said reactive optical component (10') is transparent to an electromagnetic wave in the visible spectrum.

11. The label (100) according to any one of the previous claims, wherein said reactive optical component (10') is detectable when excited by an electromagnetic radiation, in a selected spectrum of frequencies.

12. The label (100) according to any one of the previous claims, wherein said reactive optical component (10') is excitable by a natural or artificial electromagnetic radiation.

13. The label (100) according to any one of the previous claims, wherein said reactive optical component (10') comprises one or more substances comprised in a list comprising: organic dyes; metal-organic complexes containing iridium, palladium, rhodium, silver, gold, platinum, rare earths; metal nanoparticles; nanoparticles based on dielectric materials; nanoparticles of semiconductor materials.

14. The label (100) according to any one of the previous claims, wherein said reactive optical component (10') is detectable through detection means configured to detect one or more optical properties, preferably associated with photoluminescence and/or phosphorescence and/or chemiluminescence and/or electroluminescence and/or absorption phenomena.

15. The label (100) according to any one of the previous claims, wherein said overlapping region (15) contains a single reactive optical component (10').

16. The label (100) according to any one of the previous claims, wherein said authentication code (20) contains a data related to the position of the inspection area (106) and/or related to the position of the reactive optical component (10') and/or related to one or more quantities associated with optic properties of the reactive optical component (10').

17. The label (100) according to any one of the previous claims, wherein said authentication code (20) is operatively associable to means for verifying the authenticity of the label and is preferably configured to allow a connection to a remote database containing data identifying the article.

18. The label (100) according to any one of the previous claims, wherein said authentication code (20) is a two-dimensional graphic pattern, preferably printed on said support (S), in particular a data-matrix or QR code.

19. A product, comprising a product article or a document and a label (100) identifying or certifying the authenticity of the product article or document adhered on the product article or document, which label comprises:
▪ a support (S), applied to the article or document and bearing an authentication code (20);
▪ an adhesive layer (2), interposed between said support (S) and said article or document to couple said support (S) to the article or document and bearing a security element (10),
wherein the authentication code (20) of said support (S) and the security element (10) of said adhesive layer (2) are mutually positioned so as to define an overlapping region (15),
wherein said security element (10) comprises an optical component (10') reactive to an electromagnetic radiation and detectable at an inspection area (106) of said overlapping region (15),
and wherein said adhesive layer (2) is configured so that, in case of subsequent detachment of said support (S) from the article or document, said reactive optical component (10') remains adhered to the article itself.

20. The product according to the previous claim, wherein said adhesive layer (2) comprises an adhesive component (A) and an adhesiveness control component (P), the latter configured to determine a detachment resistance value of the support (S) from the adhesive layer (2) lower than a detachment resistance value of the adhesive layer (2) from the article or document.

21. A method of manufacturing a label (100) according to any one of claims 1 to 18, comprising the steps of:
▪ providing a support (S) made from a material suitable to be applied on an article to be authenticated;
▪ applying an adhesive layer (2) on an inner face of said support (S), said adhesive layer (2) bearing a security element (10) comprising a reactive optical component (10');
▪ determining, on an observation face (1s) of said support (S) opposite to said inner face, an application region (102) intended to receive an authentication code (20) associated with data identifying the article;
▪ identifying said reactive optical component (10') inside said application region (102) using means of detection;
▪ determining an inspection area (106), associated with the reactive optical component (10'), inside said application region (102);
▪ generating said authentication code (20) as a function of the position of said inspection area (106);
▪ applying said authentication code (20) on said observation face (1s) in such a way that the reactive optical component (10') is detectable in said inspection area (106).

22. The method according to the preceding claim, further comprising the step of providing a substrate (L) made from a material suitable for realizing a reversible adhesion to said support (S).

23. The method according to claim 21 or 22, wherein the adhesive layer (2), preliminary to the application, is provided with an adhesiveness control component (P), preferably applied to said inner face, apt to modify a detachment resistance value between said support (S) and an adhesive component (A) of said adhesive layer (2).

24. The method according to any of claims 21 to 23, wherein said overlapping region (15) and/or said inspection area (106) is determined with respect to the relative position of a reference element (101) borne permanently from support (S).

25. A verification method of the authenticity of an article bearing a label (100) according to any one of claims 1 to 18, which verification method comprises the steps of:
▪ exposing the support (S) to an electromagnetic radiation suitable for allowing the detection of the reactive optical component (10') through verification means;
▪ detecting a parameter of the reactive optical component (10');
▪ comparing the detected parameter with identification data associated with the authentication code (20);
▪ authenticating the article if the detected parameter coincides with the identification data.

26. The verification method according to the previous claim, wherein said parameter comprises a position data of the reactive optical component (10') with respect to a reference element (101) borne permanently by the support (S) and/or a quantity associated with a property of said reactive optical component (10').

27. The verification method according to the previous claim, wherein said quantity is included in a list comprising: the decay or rise constant of the luminescent emission, reflectance, emission spectrum.

28. The verification method according to any one of the claims 25 to 27, further comprising the step of associating said authentication code (20) with an identification data of the article stored in a remote database.

## Patentansprüche

1. Etikett (100), das die Echtheit eines Artikels identifiziert oder zertifiziert, wobei das Etikett (100) umfasst:
- einen Träger (S), der zum Anbringen am Artikel konfiguriert ist und einen Authentifizierungscode (20) des Artikels trägt;
- ein entfernbares Substrat (L), das reversibel an dem Träger (S) haftet;
- eine Klebeschicht (2), die zwischen dem Träger (S) und dem entfernbaren Substrat (L) angeordnet ist, und so konfiguriert ist, dass sie den Träger (S) mit dem Artikel verbindet und ein Sicherheitselement (10) trägt,
wobei der Authentifizierungscode (20) des Trägers (S) und des Sicherheitselements (10) der Klebeschicht (2) so zueinander positioniert sind, dass sie einen Überlappungsbereich (15) definieren,
wobei das Sicherheitselement (10) eine optische Komponente (10') umfasst, die reaktiv auf eine elektromagnetische Strahlung und nachweisbar an einem Inspektionsbereich (106) des Überlappungsbereichs (15) ist und wobei die Klebeschicht (2) so konfiguriert ist, dass im Falle einer späteren Ablösung des Trägers (S) vom Artikel die reaktive optische Komponente (10') am Artikel selbst haftenbleibt.

2. Etikett (100) nach Anspruch 1, wobei die Klebeschicht (2) eine Klebekomponente (A) und eine Klebefähigkeitskontrollkomponente (P) umfasst, wobei die Kontrollkomponente (P) geeignet ist, einen Ablösungswiderstandswert zwischen dem Träger (S) und der Klebstoffkomponente (A) zu modulieren.

3. Etikett (100) nach Anspruch 2, wobei die Klebefähigkeitskontrollkomponente (P) so konfiguriert ist, dass sie einen Ablösewiderstandswert des Trägers (S) von der Klebeschicht (A) bestimmt, der niedriger ist als ein Ablösewiderstandswert der Klebeschicht (A) aus dem Artikel.

4. Etikett (100) nach Anspruch 2 oder 3, wobei die die Haftfähigkeit steuernde Komponente (P) in Form eines Materialfilms vorliegt, der auf einer Grenzfläche des Trägers (S) mit der Klebeschicht (A) aufgebracht ist.

5. Etikett (100) nach einem der Ansprüche 2 bis 4, wobei die die Haftfähigkeit steuernde Komponente (P) ein Material auf der Basis von Silikon, natürlichem oder synthetischem Wachs umfasst.

6. Etikett (100) nach einem der vorherigen Ansprüche, wobei der Träger (S) aus einem Material besteht, das für eine elektromagnetische Strahlung in einem ausgewählten Frequenzspektrum transparent ist.

7. Etikett (100) nach einem der vorhergehenden Ansprüche, wobei der Träger (S) aus einem Kunststoff- oder Papiermaterial besteht.

8. Etikett (100) nach einem der vorhergehenden Ansprüche, das eine Vielzahl reaktiver optischer Komponenten (10') umfasst, die in einer zufälligen Verteilung von der Klebeschicht (2) getragen werden.

9. Etikett (100) nach einem der vorhergehenden Ansprüche, wobei die reaktive optische Komponente (10') pflanzliche oder synthetische Fasern umfasst.

10. Etikett (100) nach einem der vorhergehenden Ansprüche, wobei die reaktive optische Komponente (10') für eine elektromagnetische Welle im sichtbaren Spektrum transparent ist.

11. Etikett (100) nach einem der vorhergehenden Ansprüche, wobei die reaktive optische Komponente (10') bei Anregung durch eine elektromagnetische Strahlung in einem ausgewählten Frequenzspektrum erkennbar ist.

12. Etikett (100) nach einem der vorhergehenden Ansprüche, wobei die reaktive optische Komponente (10') durch natürliche oder künstliche elektromagnetische Strahlung anregbar ist.

13. Etikett (100) nach einem der vorhergehenden Ansprüche, wobei die reaktive optische Komponente (10') eine oder mehrere Substanzen umfasst, die in einer Liste enthalten sind, die Folgendes umfasst: organische Farbstoffe; metallorganische Komplexe mit Iridium, Palladium, Rhodium, Silber, Gold, Platin, seltenen Erden; Metallnanopartikel; Nanopartikel auf Basis dielektrischer Materialien; Nanopartikel aus Halbleitermaterialien.

14. Etikett (100) nach einem der vorhergehenden Ansprüche, wobei die reaktive optische Komponente (10') durch Detektionsmittel nachweisbar ist, die so konfiguriert sind, dass sie eine oder mehrere optische Eigenschaften erkennen, die vorzugsweise mit Photolumineszenz- und/oder Phosphoreszenz- und/oder Chemilumineszenz- und /oder Elektrolumineszenz- und/oder Absorptionsphänomene.

15. Etikett (100) nach einem der vorhergehenden Ansprüche, wobei der Überlappungsbereich (15) eine einzelne reaktive optische Komponente (10') enthält.

16. Etikett (100) nach einem der vorhergehenden Ansprüche, wobei der Authentifizierungscode (20) Daten enthält, die sich auf die Position des Inspektionsbereichs (106) und/oder auf die Position der reaktiven optischen Komponente (10') beziehen und/oder mit einer oder mehreren Größen in Zusammenhang stehen, die mit optischen Eigenschaften der reaktiven optischen Komponente (10') verbunden sind.

17. Etikett (100) nach einem der vorhergehenden Ansprüche, wobei der Authentifizierungscode (20) operativ mit Mitteln zur Überprüfung der Authentizität des Etiketts verbindbar ist und vorzugsweise so konfiguriert ist, dass er eine Verbindung zu einer entfernten Datenbank ermöglicht, die Daten zur Identifizierung des Artikels enthält.

18. Etikett (100) nach einem der vorhergehenden Ansprüche, wobei der Authentifizierungscode (20) ein zweidimensionales grafisches Muster ist, vorzugsweise auf den Träger (S) gedruckt, insbesondere ein Datenmatrix- oder QR-Code.

19. Produkt, umfassend einen Produktartikel oder ein Dokument und ein Etikett (100), das die Echtheit des Produktartikels oder Dokuments identifiziert oder zertifiziert und auf dem Produktartikel oder Dokument angebracht ist, wobei das Etikett umfasst:
- einen Träger (S), der auf den Artikel oder das Dokument aufgebracht ist und einen Authentifizierungscode (20) trägt;
- eine Klebeschicht (2), die zwischen dem Träger (S) und dem Artikel oder Dokument angeordnet ist, um den Träger (S) mit dem Artikel oder Dokument zu verbinden und ein Sicherheitselement (10) trägt,
wobei der Authentifizierungscode (20) des Trägers (S) und das Sicherheitselement (10) der Klebeschicht (2) so zueinander positioniert sind, dass sie einen Überlappungsbereich (15) definieren, wobei das Sicherheitselement (10) eine optische Komponente (10') umfasst, die an einer elektromagnetischen Strahlung reagiert und in einem Inspektionsbereich (106) des Überlappungsbereichs (15) nachweisbar ist, und wobei die Klebeschicht (2) so konfiguriert ist, dass im Falle einer späteren Ablösung des Trägers (S) vom Artikel oder Dokument die reaktive optische Komponente (10') am Artikel selbst haftenbleibt.

20. Produkt nach dem vorherigen Anspruch, wobei die Klebeschicht (2) eine Klebekomponente (A) und eine Klebefähigkeitskontrollkomponente (P) umfasst, wobei letztere dazu konfiguriert ist, einen Ablösewiderstandswert des Trägers (S) von der Klebeschicht (2) zu bestimmen, der niedriger als ein Ablösewiderstandswert der Klebeschicht (2) vom Artikel oder Dokument ist.

21. Verfahren zur Herstellung eines Etiketts (100) nach einem der Ansprüche 1 bis 18, umfassend die Schritte:
- Bereitstellen eines Trägers (S) aus einem Material, das zum Auftragen auf einen Artikel geeignet ist, der authentifiziert werden soll;
- Aufbringen einer Klebeschicht (2) auf einer Innenseite des Trägers (S), wobei die Klebeschicht (2) ein Sicherheitselement (10) trägt, das eine reaktive optische Komponente (10') umfasst;
- Bestimmen eines Anwendungsbereichs (102) auf einer Beobachtungsfläche (1s) des Trägers (S) gegenüber der Innenfläche, der dazu bestimmt ist, einen Authentifizierungscode (20) zu empfangen, der mit Daten zur Identifizierung des Artikels verknüpft ist;
- Identifizieren der reaktiven optischen Komponente (10') innerhalb des Anwendungsbereichs (102) unter Verwendung von Erkennungsmitteln;
- Bestimmen eines Inspektionsbereichs (106), der der reaktiven optischen Komponente (10'), innerhalb des Anwendungsbereichs (102), zugeordnet ist;
- Erzeugen des Authentifizierungscodes (20) als Funktion der Position des Inspektionsbereichs (106);
- Anbringen des Authentifizierungscodes (20) auf der Beobachtungsfläche (1s), so dass die reaktive optische Komponente (10') im Inspektionsbereich (106) erkennbar ist.

22. Verfahren nach dem vorhergehenden Anspruch, das außerdem den Schritt des Bereitstellens eines Substrats (L) umfasst, das aus einem Material hergestellt ist, das zur Realisierung einer reversiblen Haftung an dem Träger (S) geeignet ist.

23. Verfahren nach Anspruch 21 oder 22, wobei die Klebeschicht (2) vor dem Auftragen mit einer Klebefähigkeitskontrollkomponente (P) versehen wird, die vorzugsweise auf die Innenfläche aufgetragen wird und geeignet ist, einen Ablösungswiderstandswert zwischen den Trägern (S) und einer Klebekomponente (A) der Klebeschicht (2), zu modifizieren.

24. Verfahren nach einem der Ansprüche 21 bis 23, wobei der Überlappungsbereich (15) und/oder der Inspektionsbereich (106) in Bezug auf die relative Position eines Referenzelements (101) bestimmt wird, das dauerhaft vom Träger (S) getragen wird.

25. Verfahren zur Überprüfung der Echtheit eines Artikels, der ein Etikett (100) nach einem der Ansprüche 1 bis 18 trägt, wobei das Überprüfungsverfahren die Schritte umfasst:
- Aussetzen des Trägers (S) einer elektromagnetischen Strahlung, die geeignet ist, die Erkennung der reaktiven optischen Komponente (10') durch Überprüfungsmittel zu ermöglichen;
- Erkennen eines Parameters der reaktiven optischen Komponente (10');
- Vergleichen des erfassten Parameters mit Identifikationsdaten, die dem Authentifizierungscode (20) zugeordnet sind;
- Authentifizieren des Artikels, wenn der erfasste Parameter mit den Identifikationsdaten übereinstimmt.

26. Verifizierungsverfahren nach dem vorherigen Anspruch, wobei der Parameter Positionsdaten der reaktiven optischen Komponente (10') in Bezug auf ein Referenzelement (101) umfasst, das dauerhaft von der Trägers (S) getragen wird, und/oder eine damit verbundene Größe umfasst, die mit der Eigenschaft der reaktiven optischen Komponente (10') verbunden ist.

27. Verifizierungsverfahren nach dem vorherigen Anspruch, wobei die Größe in einer Liste enthalten ist, die Folgendes umfasst: die Abkling- oder Anstiegskonstante der Lumineszenzemission, des Reflexionsgrads und des Emissionsspektrums.

28. Verifizierungsverfahren nach einem der Ansprüche 25 bis 27, das außerdem den Schritt des Zuordnens des Authentifizierungscodes (20) zu Identifikationsdaten des Artikels umfasst, die in einer entfernten Datenbank gespeichert sind.

## Revendications

1. Etiquette (100) identifiant ou certifiant l'authenticité d'un article, l'étiquette (100) comprenant:
- un support (S), configuré pour être appliqué sur l'article et portant un code d'authentification (20) de l'article;
- un substrat amovible (L), qui adhère de manière réversible audit support (S);
- une couche adhésive (2), interposée entre ledit support (S) et ledit substrat amovible (L), configurée pour coupler ledit support (S) à l'article et portant un élément de sécurité (10),
dans laquelle le code d'authentification (20) dudit support (S) et l'élément de sécurité (10) de ladite couche adhésive (2) sont mutuellement positionnés de manière à définir une zone de chevauchement (15),
dans laquelle ledit élément de sécurité (10) comprend un composant optique (10') réactif à un rayonnement électromagnétique et détectable au niveau d'une zone d'inspection (106) de ladite région de chevauchement (15)
et dans laquelle ladite couche adhésive (2) est configurée de sorte qu'en cas d'un détachement ultérieur dudit support (S) de l'article, ledit composant optique réactif (10') reste collé à l'article lui-même.

2. Etiquette (100) selon la revendication 1, dans laquelle ladite couche adhésive (2) comprend un composant adhésif (A) et un composant de contrôle d'adhésivité (P), ledit composant de contrôle (P) étant apte à moduler une valeur de résistance au détachement entre ledit support (S) et ledit composant adhésif (A).

3. Etiquette (100) selon la revendication 2, dans laquelle ledit composant de contrôle d'adhésivité (P) est configuré pour déterminer une valeur de résistance au détachement du support (S) de la couche adhésive (A) inférieure à une valeur de résistance au détachement de la couche adhésive (A) de l'article.

4. Etiquette (100) selon la revendication 2 ou 3, dans laquelle ledit composant de contrôle d'adhésivité (P) a la forme d'un film de matériau appliqué sur une surface d'interface du support (S) avec la couche adhésive (A).

5. Etiquette (100) selon l'une quelconque des revendications 2 à 4, dans laquelle ledit composant de contrôle d'adhésivité (P) comprend un matériau à base de silicone, de cire naturelle ou synthétique.

6. Etiquette (100) selon l'une quelconque des revendications précédentes, dans laquelle ledit support (S) est réalisé en un matériau transparent à un rayonnement électromagnétique dans un spectre de fréquences sélectionné.

7. Etiquette (100) selon l'une quelconque des revendications précédentes, dans laquelle ledit support (S) est constitué d'un matériau plastique ou de papier.

8. Etiquette (100) selon l'une quelconque des revendications précédentes, qui comprend une pluralité de composants optiques réactifs (10'), portés par ladite couche adhésive (2) selon une répartition aléatoire.

9. Etiquette (100) selon l'une quelconque des revendications précédentes, dans laquelle ledit composant optique réactif (10') comprend des fibres végétales ou synthétiques.

10. Etiquette (100) selon l'une quelconque des revendications précédentes, dans laquelle ledit composant optique réactif (10') est transparent à une onde électromagnétique dans le spectre visible.

11. Etiquette (100) selon l'une quelconque des revendications précédentes, dans laquelle ledit composant optique réactif (10') est détectable lorsqu'il est excité par un rayonnement électromagnétique dans un spectre sélectionné de fréquences.

12. Etiquette (100) selon l'une quelconque des revendications précédentes, dans laquelle ledit composant optique réactif (10') est excitable par un rayonnement électromagnétique naturel ou artificiel.

13. Etiquette (100) selon l'une quelconque des revendications précédentes, dans laquelle ledit composant optique réactif (10') comprend une ou plusieurs substances comprises dans une liste comprenant: des colorants organiques; des complexes organométalliques contenant de l'iridium, du palladium, du rhodium, de l'argent, de l'or, du platine, des terres rares; de nanoparticules métalliques; de nanoparticules à base de matériaux diélectriques; de nanoparticules de matériaux semi-conducteurs.

14. Etiquette (100) selon l'une quelconque des revendications précédentes, dans laquelle ledit composant optique réactif (10') est détectable par des moyens de détection configurés pour détecter une ou plusieurs propriétés optiques, de préférence associées à la photoluminescence et/ou à la phosphorescence et/ou à la chimiluminescence et/ou à des phénomènes d'électroluminescence et/ou d'absorption.

15. Etiquette (100) selon l'une quelconque des revendications précédentes, dans laquelle ladite région de chevauchement (15) contient un seul composant optique réactif (10').

16. Etiquette (100) selon l'une quelconque des revendications précédentes, dans laquelle ledit code d'authentification (20) contient des données relatives à la position de la zone d'inspection (106) et/ou relatives à la position du composant optique réactif (10') et/ou liées à une ou plusieurs quantités associées à des propriétés optiques du composant optique réactif (10').

17. Etiquette (100) selon l'une quelconque des revendications précédentes, dans laquelle ledit code d'authentification (20) est fonctionnellement associable à des moyens pour vérifier l'authenticité de l'étiquette et est de préférence configuré pour permettre une connexion à une base de données distante contenant des données identifiant l'article.

18. Etiquette (100) selon l'une quelconque des revendications précédentes, dans laquelle ledit code d'authentification (20) est un motif graphique bidimensionnel, de préférence imprimé sur ledit support (S), notamment une matrice de données ou un code QR.

19. Produit, comprenant un article de produit ou un document et une étiquette (100) identifiant ou certifiant l'authenticité de l'article de produit ou du document collée sur l'article de produit ou le document, laquelle étiquette comprend:
- un support (S), appliqué sur l'article ou document et portant un code d'authentification (20);
- une couche adhésive (2), interposée entre ledit support (S) et ledit article ou document pour coupler ledit support (S) à l'article ou document et portant un élément de sécurité (10),
dans lequel le code d'authentification (20) dudit support (S) et l'élément de sécurité (10) de ladite couche adhésive (2) sont mutuellement positionnés de manière à définir une zone de chevauchement (15),
dans lequel ledit élément de sécurité (10) comprend un composant optique (10') réactif à un rayonnement électromagnétique et détectable au niveau d'une zone d'inspection (106) de ladite zone de chevauchement (15),
et dans lequel ladite couche adhésive (2) est configurée de sorte qu'en cas d'un détachement ultérieur dudit support (S) de l'article ou du document, ledit composant optique réactif (10') reste collé à l'article lui-même.

20. Produit selon la revendication précédente, dans lequel ladite couche adhésive (2) comprend un composant adhésif (A) et un composant de contrôle d'adhésivité (P), ce dernier étant configuré pour déterminer une valeur de résistance au détachement du support (S) de la couche adhésive (2) inférieure à une valeur de résistance au détachement de la couche adhésive (2) de l'article ou du document.

21. Procédé de fabrication d'une étiquette (100) selon l'une quelconque des revendications 1 à 18, comprenant les étapes consistant à:
- fournir un support (S) en un matériau apte à être appliqué sur un article à authentifier;
- appliquer une couche adhésive (2) sur une face interne dudit support (S), ladite couche adhésive (2) portant un élément de sécurité (10) comprenant un composant optique réactif (10');
- déterminer, sur une face d'observation (1s) dudit support (S) opposée à ladite face interne, une zone d'application (102) destinée à recevoir un code d'authentification (20) associé à des données identifiant l'article;
- identifier ledit composant optique réactif (10') à l'intérieur de ladite zone d'application (102) à l'aide de moyens de détection;
- déterminer une zone d'inspection (106), associée au composant optique réactif (10'), à l'intérieur de ladite zone d'application (102);
- générer ledit code d'authentification (20) en fonction de la position de ladite zone d'inspection (106);
- appliquer ledit code d'authentification (20) sur ladite face d'observation (1s) de manière à ce que le composant optique réactif (10') soit détectable dans ladite zone d'inspection (106).

22. Procédé selon la revendication précédente, comprenant en outre l'étape consistant à fournir un substrat (L) réalisé à partir d'un matériau adapté pour réaliser une adhésion réversible audit support (S).

23. Procédé selon la revendication 21 ou 22, dans lequel la couche adhésive (2), préalable à l'application, est pourvue d'un composant de contrôle d'adhésivité (P), de préférence appliqué sur ladite face interne, apte à modifier une valeur de résistance au détachement entre ledit support (S) et un composant adhésif (A) de ladite couche adhésive (2).

24. Procédé selon l'une quelconque des revendications 21 à 23, dans lequel ladite zone de chevauchement (15) et/ou ladite zone d'inspection (106) est déterminée par rapport à la position relative d'un élément de référence (101) supporté en permanence par le support (S).

25. Procédé de vérification de l'authenticité d'un article portant une étiquette (100) selon l'une quelconque des revendications 1 à 18, le procédé de vérification comprenant les étapes consistant à:
- exposer le support (S) à un rayonnement électromagnétique apte à permettre la détection du composant optique réactif (10') par des moyens de vérification;
- détecter un paramètre du composant optique réactif (10');
- comparer le paramètre détecté avec des données d'identification associées au code d'authentification (20);
- authentifier l'article si le paramètre détecté coïncide avec les données d'identification.

26. Procédé de vérification selon la revendication précédente, dans lequel ledit paramètre comprend des données de position du composant optique réactif (10') par rapport à un élément de référence (101) porté en permanence par le support (S) et/ou une quantité associée à une propriété dudit composant optique réactif (10').

27. Procédé de vérification selon la revendication précédente, dans lequel ladite quantité est incluse dans une liste comprenant: la constante de décroissance ou de montée de l'émission luminescente, la réflectance, le spectre d'émission.

28. Procédé de vérification selon l'une quelconque des revendications 25 à 27, comprenant en outre l'étape d'association dudit code d'authentification (20) à une donnée d'identification de l'article stockée dans une base de données distante.
